# EUROPEAN PATENT APPLICATION

(11) **EP 4 454 773 A1**
(43) Date of publication of application: **30.10.2024**
(21) Application number: 22911502.7
(22) Date of filing: 24.08.2022
(51) Int. Cl.: B09B 3/50, C08J 11/00, D01F 9/12, B29B 17/04, B09B 101/85, B09B 101/75

(54) **RECYCLED CARBON FIBER MANUFACTURING APPARATUS AND RECYCLED CARBON FIBER MANUFACTURING METHOD USING SAME**

(30) Priority: 24.12.2021 KR 20210187441
(71) Applicant: Ilsungcomposites., Co Ltd, Gumi-si, Gyeongsangbuk-do, 39372 (KR)
(72) Inventor: CHEON, Jinsil, Gyeongsan-si Gyeongsangbuk-do 38536 (KR); LEE, Sang Jin, Gyeongsan-si Gyeongsangbuk-do 38651 (KR)
(74) Representative: Epping - Hermann - Fischer
(86) International application number: PCT/KR2022/012680
(87) International publication number: WO 2023/120863

(57) **Abstract**

The present invention relates to an apparatus for manufacturing recycled carbon fibers and, more specifically, to an apparatus for manufacturing recycled carbon fibers using induction heat generation by high-frequency electromagnetic radiation of carbon fibers in carbon fiber mixed waste, and a method for manufacturing recycled carbon fibers using the same.

## Description

### CROSS REFERENCE TO RELATED APPLICATION

The present application claims priority based on Korean Patent Application No.10-2021-0187441, filed on December 24th, 2021, the entire content of which is incorporated herein for all purposes by this reference.

### BACKGROUND OF THE DISCLOSURE

### 1. Field of the Disclosure

The present invention relates to an apparatus for manufacturing recycled carbon fibers and, more specifically, to an apparatus for manufacturing recycled carbon fibers using induction heat generated by high-frequency electromagnetic radiation of carbon fibers in carbon fiber mixed waste, and a method for manufacturing recycled carbon fibers using the same.

### 2. Description of the Related Art

Carbon fibers are commonly used to make composites that include woven, chopped, or milled carbon fibers in a resin matrix. These composites can be very light, strong and durable.

The carbon fiber includes folded layers of a carbon layer. These carbon fibers are usually non-reactive and thus resistant to fire or corrosion. Each fiber may be about 7 microns in diameter. Carbon fiber composites consisting of resins and continuous, chopped or ground carbon fibers impregnated therein can have high tensile strength and relatively low density, and thus many uses for these materials have been developed.

While the demand for carbon fiber is high, it has been found that the amount of materials discarded in the production process is significant, with an estimated 40% of new carbon fibers and resins being discarded in the carbon fiber production process. These materials have traditionally been sent to landfills.

Currently, commercially produced recycled carbon fibers (Recycled Carbon fiber, rCF) are supplied with raw materials from carbon fiber prepreg scraps generated in the process of manufacturing a composite material and carbon fiber-reinforced polymer composite material waste whose use-period has passed.

As conventional technologies, Japanese Patent Application Publication No. 2008-285601 (2008.11.27.) discloses a technology for a regeneration treatment apparatus and a regeneration treatment method of carbon fibers in which only a matrix component is heated and removed from carbon fiber reinforced plastic by thermal decomposition, and carbon fibers are selectively recovered without deteriorating mechanical properties, and Japanese Patent Application Publication No. 2011-122032 (2011.06.23) discloses a technology for recovering carbon fibers in a state in which 68 to 80% of the plastic is removed by treating the carbon fiber reinforced plastic with superheated water vapor of 800°C. or more.

Recycled carbon fiber is manufactured through a mechanical recycling technology, and some chemical recycling technologies are being developed. In the case of mechanical recycling, the polymer matrix is removed through a heat treatment process. In this case, in order to improve the efficiency of the heat treatment process, the carbon fiber mixed waste (Prepreg scrap, CFRP, or the like) is processed into a small-sized shredded product through a primary pretreatment by shredding, crushing, grinding, or a similar mechanical process, and then recycled carbon fibers are obtained through pyrolysis of the polymer matrix by heat treatment in an inert atmosphere.

Meanwhile, in the case of the primary pretreatment process (shredding, crushing, grinding, etc.), the aspect ratio of the recycled carbon fiber is reduced and non-uniform, and thus excellent physical properties cannot be expected. In addition, since the pyrolysis of the polymer matrix in the existing inactive atmosphere mainly uses hot air (5x10-1 W/cm), radiant heat (8 W/cm), and the like, low energy efficiency is obtained, the Batch type equipment using the rotating drum is operated for sufficient pyrolysis, making it difficult to introduce continuous production equipment, and since the heat treatment should be performed for a long time for sufficient pyrolysis of the polymer matrix, researches related to improvement of efficiency of the production technology of the recycled carbon fiber have been continuously conducted due to limitations in that equipment construction costs and operation costs are high.

In addition, in mechanical recycling processes, hot air and radiant heat used for removing the polymer matrix apply heat from the surface of the carbon fiber waste (CFRP, prepreg scrap). For the CFRP having with a laminated structure and prepreg scrap where the polymer resin exists between the fibers, an external heat source for completely removing the polymer resin present therein should be reached. However, this procedure of recycling process should depend on the characteristics of the polymer resin having a relatively low heat transfer rate among the recycling target components.

As such, the pyrolysis of the polymer matrix through a method (hot air, radiant heat, etc.) of supplying heat from the outside of the existing recycling target structure is disadvantageous in view of shape for performing uniform heat treatment of the fiber bundle, and thus, a recycling process using a new heat source is required to be developed.

Therefore, in order to manufacture recycled carbon fibers with little physical damage to the recycled carbon fibers and have a high aspect ratio, the present inventors developed an apparatus for manufacturing recycled carbon fibers utilizing induction heat generation by high-frequency electromagnetic radiation of carbon fibers contained in a polymer composite and a method for manufacturing recycled carbon fibers using the same.

### Prior art document

### Patent document

(Patent Document 1) JP 2008-285601A(2008-11-27)
(Patent Document 2) JP 2011-122032A(2011-06-23)

### SUMMARY OF THE DISCLOSURE

The present invention has been made in an effort to provide an apparatus for manufacturing a recycled carbon fibers utilizing induction heat generation by high-frequency electromagnetic radiation of a carbon fiber contained in a polymer composite without using an external heat source such as hot air or radiant heat.

In order to achieve the above object, an embodiment of the present invention provides an apparatus for manufacturing recycled carbon fibers comprising: a main body; a gas inlet on one side of the main body; a gas outlet on the opposite side of the main body; an induction coil extending through one side of the main body and facing the other side; a plurality of induction coils built into the casing of the main body; a plurality of magnetic cores embedded between the plurality of induction coils; a current applying device configured to supply current to the induction coils; wherein the outer surface of the casing of the main body is covered with an insulating material,
wherein the recycled carbon fiber manufacturing device is configured to produce recycled carbon fiber by processing carbon fiber mixed waste through induced heat generation by high-frequency electromagnetic radiation generated from the induction coils.

In one preferred embodiment of the present invention, an inert gas may be injected into the gas inlet.

In a preferred embodiment of the present invention, the gas outlet may discharge gas generated in the carbon fiber mixed waste treatment process.

In a preferred embodiment of the present disclosure, a temperature sensing unit for measuring the temperature of the reaction area inside the main body may be additionally installed on one side of the main body.

In a preferred embodiment of the present invention, a control unit for controlling the frequency, current and power of the AC current applied from the current applying device according to the temperature extracted by the temperature sensing unit may be additionally installed.

In a preferred embodiment of the present invention, the frequency of the alternating current supplied from the current applying device may be 200 to 300 kHz, the current may be 200 to 350 A, and the power may be 1500 to 2500 W.

In another preferred embodiment of the present invention, the present invention provides a method for manufacturing a recycled carbon fiber from carbon fiber mixed waste using the apparatus for manufacturing recycled carbon fibers.

In a preferred embodiment of the present invention, the carbon fiber-mixed waste may include any one or two or more polymer matrices selected from thermoplastic polymer resins and thermosetting polymer resins.

In a preferred embodiment of the present invention, the treatment temperature of the carbon fiber-mixed waste according to the induction heat may range from 350 to 1000°C.

The apparatus for manufacturing a recycled carbon fiber, according to the present invention, does not use an external heat source, such as hot air or radiant heat, and uses induction heat from high-frequency electromagnetic radiation of the carbon fiber, which is contained in a polymer composite, thereby enabling economical and rapid heating with high heating efficiency compared to a pyrolysis process using a heat transfer method by existing surface heating of a reactor, and thus reducing power consumption required for warming-up and the like, and effectively reducing process time.

In addition, induction heating by high-frequency electromagnetic radiation is convenient due to easy output and temperature control, and is hygienic and clean because there are no contaminants such as exhaust gases or the like.

In addition, in the case of treating the carbon fiber-mixed waste by using the apparatus for manufacturing a recycled carbon fiber according to the present invention, a pretreatment process (e.g., a grinding process) of the carbon fiber-mixed waste can be omitted, and thus a recycled carbon fiber having a high aspect ratio and little physical damage to the recycled carbon fiber can be obtained, and such a high-quality recycled carbon fiber can be reused in various fields.

### Brief description of drawings

FIG. 1(a) is an external schematic view of a recycling apparatus of a recycled carbon fibers according to the present invention.
FIG. 1(b) is an internal schematic view of a recycling apparatus of a recycled carbon fibers according to the present invention.
FIGS. 1(c) and 1(d) are cross-sectional views of a main body case in a recycling apparatus of a recycled carbon fibers according to the present invention.
FIG. 2 shows the components and driving flow of the high-frequency electromagnetic field generation facility used in the present invention.
FIG. 3 is a photograph of an exhaust gas generated in a process of treating a carbon fiber-reinforced polymer composite including an epoxy resin using a recycling apparatus of a recycled carbon fiber according to the present invention, observed over time.

### DESCRIPTION OF THE PREFERRED EMBODIMENTS

Unless otherwise defined, all technical and scientific terms used herein have the same meaning as commonly understood by those skilled in the art. In general, the nomenclature used herein is well known and commonly used in the art.

Throughout the present specification, when a part "includes" a certain component, this means that other components may be further included, rather than excluding other components, unless otherwise stated.

The present invention provides an apparatus for manufacturing recycled carbon fibers comprising: a main body part 100; a gas inlet 101 provided in one side of the main body; a gas outlet 102 provided in the opposite side of the main body; one induction coil 103-1 passing through one side of the main body and the opposite side facing it; a plurality of induction coils 103-2 built in a case of the main body; and a plurality of magnetic cores 104 embedded between the plurality of induction coils, wherein the outer surface of the case of the main body is covered with an insulating material 105, and the recycled carbon fiber is manufactured by treating carbon fiber mixed waste with the induction heat by high-frequency electromagnetic radiation generated from the induction coils.

That is, the apparatus for manufacturing recycled carbon fibers according to the present invention is used to effectively separate recycled carbon fibers from the carbon fiber-mixed waste by pyrolyzing a polymer matrix surrounding the carbon fibers in the carbon fiber-mixed waste by the induction heating of the carbon fibers by high-frequency electromagnetic radiation generated from the induction coils 103-1 and 103-2 embedded in the center of the main body and the main body case.

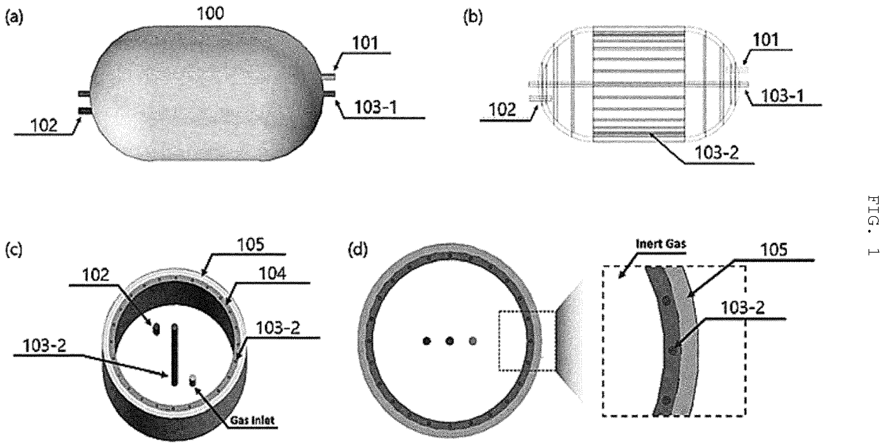

FIG. 1 shows a schematic configuration of a recycling apparatus of a recycled carbon fibers according to the present invention.

FIG. 1(a) shows the appearance of a recycled carbon fiber regeneration device according to the present invention. As shown in FIG. 1(a), a recycling apparatus of a recycled carbon fibers according to the present invention includes a main body 100, a gas inlet 101 through which an inert gas is injected in one side of the main body to prevent a decrease in physical properties due to an oxidation reaction of carbon fibers, and a gas outlet 102 through which gas generated in a pyrolysis reaction of a polymer matrix performed in a reaction region inside the main body is discharged in the opposite side of the main body.

In this case, the shape of the main body 100 is preferably a cylindrical shape, but is not limited thereto.

FIG. 1(b) shows an internal schematic view of a recycling apparatus of a recycled carbon fibers according to the present invention. The recycling apparatus of a recycled carbon fibers according to the present invention is configured such that induction coils having a high-frequency electromagnetic field for generating induction heat of carbon fiber are inside the main body and the main body case. Specifically, one induction coil 130-1 passing through one side of the main body and the opposite side facing the one side is installed, and a plurality of induction coils 130-2 are embedded in the main body case, so that the high-frequency electromagnetic field is uniformly formed in the reaction area inside the main body.

When the shape of the main body 100 is cylindrical, a uniform high-frequency electromagnetic field is formed between the induction coil 130-1, which penetrates the main body, and the plurality of induction coils 130-2 located in the casing of the main body. This configuration allows for the generation of uniform induced heat in the reaction area inside the main body.

At this time, the diameter of the induction coil (130-1) penetrating the main body is preferably in the range of 1/30 to 1/10 of the diameter of the main body. Additionally, the diameter of each of the plurality of induction coils (130-2) installed in the casing of the main body is preferably in the range of 1/50 to 1/10 of the diameter of the main body.

Here, the shape of the induction coils 130-1 and 130-2 is not limited to the cylindrical shape, and may also be a prismatic shape.

FIGS. 1(c) and 1(d) illustrate cross-sections of a case of a main body in a recycling apparatus of a recycled carbon fibers according to the present invention. A plurality of induction coils 130-2 are built in the main body case, and the loss of high-frequency electromagnetic fields generated by the induction coils can be minimized by including a plurality of magnetic cores 104 embedded between the induction coils 130-2 in the main body casing. The magnetic core may be made of a ferromagnetic body formed of a nanocomposite material in which oxides or alloys, such as plastic ferrite, ferrite resin, amorphous alloy, permalloy, or the like, having high permeability, and a magnetic body are added, and particularly, plastic ferrite having a small loss in a high frequency alternating current may be used as a magnetic core material when the high frequency alternating current is applied to the induction coil.

As an embodiment, the nanocomposite material to which the magnetic material is added may be a nanocomposite material produced by mixing a silicon-iron (Si-Fe) alloy powder and an epoxy resin.

In addition, an outer surface of the main body case is covered with an insulating material to prevent the emission of heat induced by high-frequency electromagnetic radiation to the outside.

The recycling apparatus of a recycled carbon fibers according to the present invention does not depend on heat transferred from the surface of waste mixed with carbon fibers, but instead generates induction heat directly from the carbon fibers in the waste mixed with carbon fibers by means of a high-frequency electromagnetic field generated by one induction coil 103-1 passing through a main body and a plurality of induction coils 103-1 embedded in a case of the main body, and is used as an energy source for pyrolyzing organic matters such as a polymer matrix and the like in the waste mixed with carbon fibers.

According to an embodiment of the present invention, the recycling apparatus of a recycled carbon fibers can additionally include a temperature sensing unit for measuring the temperature of a reaction area inside the main body on one side of the main body, and can additionally include a control unit for controlling the frequency, current, and power of an alternating current supplied by the current applying device, based on the temperature obtained from the temperature sensing unit. Induction heating by high-frequency electromagnetic radiation, facilitated by the temperature sensing unit and control unit, is convenient due to the ease of output and temperature control.

In the recycling apparatus of a recycled carbon fibers according to the present invention, a current applying device is connected to the induction coil, and the frequency of the alternating current supplied from the current applying device is preferably 200 to 300 kHz, the current is preferably 200 to 350 A, and the power is preferably in the range of 1500 to 2500 W, and they are not limited thereby because they are variant according to the composition and size of recycled materials.

As the frequency of the AC current applied to the induction coil is increased, the heat generation of the object to be heated is limited to the surface by the Skin Depth Effect, and thus in the case of directly treating the carbon fiber mixed waste without the first pretreatment of the carbon fiber mixed waste, it is preferable that the temperature does not exceed the upper limit of the frequency range of the AC current.

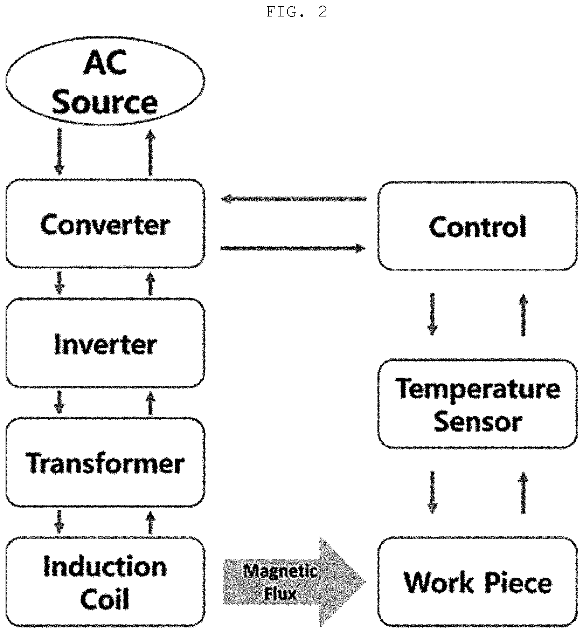

FIG. 2 shows the configuration and driving flow of the current application device of the high-frequency electromagnetic field generation facility used in the present invention. The electric energy input induced through the AC power source is input to an induction coil in the form of a high-frequency current as it passes through the Converter, the Inverter, and the Transformer. A high-frequency electromagnetic field is generated around the induction coil by the high-frequency current flowing through the induction coil. As a result, an eddy current is generated in the dielectric material (carbon fiber) applied to the object to be heated, and heat is generated by the inherent resistance thereof.

In addition, the present invention provides a method for manufacturing a recycled carbon fiber from carbon fiber mixed waste using the one apparatus for manufacturing recycled carbon fibers.

The carbon fiber mixed waste may include any one polymer matrix selected from thermoplastic polymer resins such as PA, PBT, PET, PEEK, and the like, and thermosetting polymer resins such as epoxy, phenol, vinyl ester, urethane, and the like.

As an embodiment, the temperature of treatment of the carbon fiber mixed waste by induction heat generation may be in the range of 350 to 1000° C., and in the temperature range, a thermal decomposition reaction may occur for most of the polymer matrix, and preferably, the temperature range may be 700 to 900°C. Here, the treatment temperature of the mixed waste may be set to the temperature at which the polymer matrix in the input carbon fiber mixed waste is pyrolyzed.

### Embodiments

A carbon fiber-reinforced polymer composite material composed of an epoxy resin (decomposition temperature of 500°C.) was treated using an alternating current of 263 kHz, 270 A, and 1953 W using the recycling apparatus of a recycled carbon fibers according to the present invention.

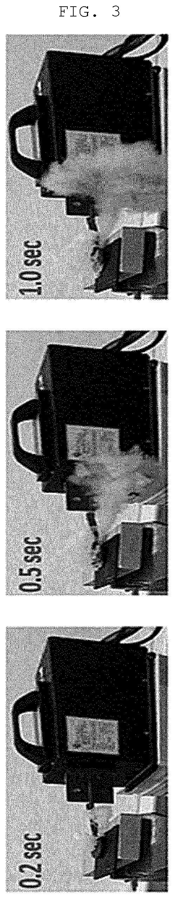

As shown in FIG. 3, the thermal decomposition of the composite material was observed with operating the recycled carbon fiber regeneration device within less than 1 sec.

As described above, specific parts of the present invention have been described in detail, and it will be apparent to those skilled in the art that such specific technologies are merely preferred embodiments, and the scope of the present invention is not limited thereby. Therefore, it will be said that the substantial scope of the present invention is defined by the appended claims and their equivalents.

## Claims

1. A recycled carbon fiber manufacturing device, comprising:
a main body; a gas inlet on one side of the main body; a gas outlet on the opposite side of the main body; an induction coil extending through one side of the main body and facing the other side; a plurality of induction coils built into the casing of the main body; a plurality of magnetic cores embedded between the plurality of induction coils; a current applying device configured to supply current to the induction coils; wherein the outer surface of the casing of the main body is covered with an insulating material,
wherein the recycled carbon fiber manufacturing device is configured to produce recycled carbon fiber by processing carbon fiber mixed waste through induced heat generation by high-frequency electromagnetic radiation generated from the induction coils.

2. The apparatus for manufacturing recycled carbon fibers of claim 1, wherein inert gas is injected into the gas inlet.

3. The apparatus for manufacturing recycled carbon fibers of claim 1, wherein the gas outlet discharges gas generated in a carbon fiber mixed waste treatment process.

4. The apparatus for manufacturing recycled carbon fibers of claim 1, wherein a temperature sensing unit for measuring the temperature of the reaction area inside the main body is additionally installed on one side of the main body.

5. The apparatus for manufacturing recycled carbon fibers of claim 4, further comprising: a controller configured to control a frequency, a current, and a power of an alternating current (AC) applied from the current applying device according to the temperature extracted by the temperature sensing unit.

6. The apparatus for manufacturing recycled carbon fibers of claim 1, wherein the frequency of the alternating current supplied from the current supplying device is 200 to 300 kHz, the current is 200 to 350 A, and the power is 1500 to 2500 W.

7. A method for manufacturing a recycled carbon fibers from carbon fiber mixed waste using an apparatus for manufacturing recycled carbon fibers according to any one of claims 1 to 6.

8. The method for manufacturing a recycled carbon fibers from carbon fiber mixed waste of claim 7, wherein the carbon fiber-mixed waste includes any one or two or more polymer matrices selected from thermoplastic polymer resins and thermosetting polymer resins.

9. The method for manufacturing a recycled carbon fibers from carbon fiber mixed waste of claim 7, wherein the treatment temperature of the carbon fiber mixed waste according to the induction heat is 350 to 1000°C.
